(19) Europäisches Patentamt
European Patent Office
Office européen des brevets

(11) Veröffentlichungsnummer: **0 535 456 A1**

# (12) EUROPÄISCHE PATENTANMELDUNG

(21) Anmeldenummer: **92115904.2**

(22) Anmeldetag: **17.09.92**

(51) Int. Cl.[5]: **C08F 285/00**, C08L 51/00, C08L 69/00, C08L 25/08

(30) Priorität: **30.09.91 DE 4132497**

(43) Veröffentlichungstag der Anmeldung: **07.04.93 Patentblatt 93/14**

(84) Benannte Vertragsstaaten: **BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Niessner, Norbert, Dr.**
**Buhl'scher Hof 10**
**W-6701 Friedelsheim(DE)**
Erfinder: **Seitz, Friedrick, Dr.**
**Von-Wieser-Strasse 1**
**W-6701 Friedelsheim(DE)**

## (54) Mehrschaliges Pfropfcopolymerisat.

(57) Pfropfcopolymerisat A, bestehend aus - in der Reihenfolge A1 bis A4 von innen nach außen und jeweils bezogen auf die Summe aus A1 bis A3 -

A1: 5 bis 85 Gew.-% eines Kerns (Pfropfgrundlage) A1 mit einer Glastemperatur $T_g$ oberhalb von 25° C, bestehend aus:
A11: 50 bis 99,9 Gew.-% mindestens eines vinylaromatischen Monomeren,
A12: 0,1 bis 10 Gew.-% mindestens eines polyfunktionellen, vernetzend wirkenden Monomeren und/oder ein pfropfaktiv wirkendes Monomer mit zwei oder mehr funktionellen Gruppen unterschiedlicher Reaktivität, wobei vernetzende und pfropfaktive Wirkung auf ein einziges Monomer zutreffen können,
A13: bis 49,9 Gew.-% eines oder mehrerer copolymerisierbarer Monomerer;
A2: 5 bis 85 Gew.-% einer ersten Pfropfhülle A2 aus kautschukelastischem Material mit einer $T_g$ unterhalb von 25° C, bestehend aus:
A21: 50 bis 99,9 Gew.-% mindestens eines Alkylacrylates mit 1 bis 18 C-Atomen im Alkylrest,
A22: 0,1 bis 10 Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität, wobei vernetzende und pfropfaktive Wirkung auf ein einziges Monomer zutreffen können,
A23: 0 bis 49,9 Gew.-% eines oder mehrerer copolymerisierbarer ungesättigter Monomerer;
A3: 5 bis 85 Gew.-% einer zweiten Pfropfhülle A3 aus vinylaromatischen Monomer(en) mit einer $T_g$ oberhalb von 25° C, bestehend aus:
A31: 50 bis 100 Gew.-% mindestens eines vinylaromatischen Monomeren,
A32: 0 bis 10 Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität,
A33: 0 bis 50 Gew.-% eines oder mehrerer copolymerisierbarer Monomerer;
A4: 5 bis 85 Gew.-% einer dritten Pfropfhülle A4 aus einem Copolymeren aus
A41: 1 bis 99 Gew.-% eines oder mehrerer vinylaromatischer Monomerer,
A42: 1 bis 99 Gew.-% eines oder mehrerer copolymerisierbarer Monomerer.

EP 0 535 456 A1

Die Erfindung betrifft ein durch Emulsionspolymerisation hergestelltes, mehrschalig aufgebautes Pfropfcopolymerisat.

Solche Pfropfcopolymerisate werden vor allem als sog. Schlagzähmodifier, z.B. für PVC, PMMA usw. verwendet, wobei das Pfropfcopolymerisat in Form von Teilchen in einem thermoplastischen Polymeren dispergiert ist.

Vorteilhafterweise handelt es sich bei den bekannten Pfropfcopolymerisaten mit Kern/Schale-Aufbau um 3- oder mehr-stufige Polymerisate, bestehend aus einem "harten" Kern, einer "weichen" ersten Hülle (oder vice versa) und einer oder mehrerer weiterer Hüllen, wobei die äußerste Hülle im allgemeinen eine "harte" Hülle ist, welche die (Teil-)Verträglichkeit zu einer thermoplastischen Matrix herstellen soll.

Die Begriffe "hart" und "weich" beziehen sich auf die Lage der Glasübergangstemperatur $T_g$ der entsprechenden Homopolymeren oberhalb bzw. unterhalb Raumtemperatur.

Der Kern/Schale-Aufbau, insbesondere im Falle der PVC- und PMMA-Modifier dient dazu, den Unterschied des Brechungsindex zwischen dispergierter Kautschukphase und kontinuierlicher thermoplastischer Hartmatrix - zumindest teilweise - anzugleichen. Daraus resultieren sowohl schlagzähe als auch transparente thermoplastische Werkstoffe.

Von den Pfropfcopolymerisaten zeichnen sich diejenigen ohne ungesättigte Anteile durch eine besondere Witterungsstabilität aus. Dabei handelt es sich insbesondere um Acrylatkautschuke. Vernetzend und/oder pfropfaktiv wirkende Monomere sorgen einerseits für ein kautschukelastisches Verhalten dieser Acrylatkautschuke und ermöglichen andererseits eine Anbindung weiterer Hüllen an die Kautschuk-Grundlage.

Eine ausführliche Diskussion optisch transparenter Mehrphasensysteme findet sich in: H.J. Biangardi, H. Sturm, G. Kostersitz, Angew. Makromol. Chem. 183, 221-241 (1990).

Um das physikalisch wirksame Kautschukvolumen möglichst hoch zu machen, ohne die effektive Kautschukmenge zu erhöhen, müssen Anteile einer Hartkomponente in die Kautschukteilchen eingeschlossen werden. Dieses Konzept liegt der Entwicklung des schlagzähmodifizierten Polystyrols (high impact polystyrene) oder der ABS-Kunststoffe zugrunde (z.B. beschrieben in "Rubber Toughened Plastics", Advances in Chemistry Series 222, s. 2 (1989)). Das bedeutet, daß im Falle eines Emulsionspolymerisats ein harter Kern von einer weichen ersten Hülle umschlossen sein muß, die dann eine weitere, mit der kontinuierlichen thermoplastischen Matrix verträgliche zweite Hülle besitzt.

In der DE-A-2 107 350 und in der BE-A-783 190 sind mehrschichtig aufgebaute Emulsionscopolymerisate mit hart-weich-hart-Morphologie beschrieben. Der Aufbau der äußeren, harten Schale erfolgt jedoch nicht kontrolliert in einer Emulsions- sondern in einer Suspensionspolymerisation. Diese Teilchen ermöglichen eine gute Schlagzähmodifizierung.

In der BE-A-770 035, DE-A-2 244 519 und der US-A-3 971 835 werden Systeme aus einem harten Styrol-Kern, einer ersten Hülle aus Butylacrylat-Kautschuk und einer zweiten Hülle aus MMA zur Schlagzähmodifizierung von PVC beschrieben.

In der JA-A-7 023 150 wird ein System aus einem Styrol-Kern, einer ersten Hülle aus einem vernetztem Alkylacrylat und einer zweiten Hülle aus - beispielsweise - einer Mischung aus Styrol und Acrylnitril zur Schlagzähmodifizierung von PVC vorgeschlagen.

In der FR-A-2 324 660 wird ein System aus einem unvernetztem Polystyrolco-MMA-Kern und einer unvernetzten katuschukartigen Hülle aus Alkylacrylat + Styrol/Acrylnitril beschrieben, als Verarbeitungshilfsmittel für PVC Formmassen.

Die US-A- 4 082 895 empfiehlt Pfropfcopolymere aus einem Acrylnitril-Copolymeren als Kern, einer ersten Hülle aus vernetztem Acrylat-Kautschuk und einer äußeren Hülle aus beispielsweise Styrol/Acrylnitril. Nachteilig ist hier die bei hohem Acrylnitrilgehalt auftretende Vergilbung.

PMMA-Modifier aus einem harten Kern, einer elastomeren ersten Hülle und einer zweiten Hülle aus mindestens 80 % MMA werden in der DE-A-3 300 526 beschrieben.

DE 23 24 316 beschreibt einen mehrschaligen Acrylatkautschuk aus einem harten, vernetzten Kern, einer ersten Hülle aus Acrylat und einer zweiten Hülle aus beispielsweise einem Styrol-Acrylnitril-Copolymeren.

In den JA-A-85 063 248, 85 069 154 und 85 147 460 werden Pfropfcopolymere beschrieben mit einem harten Kern aus z.B. Polystyrol, einer ersten Hülle aus z.B. Butylacrylat und einer äußeren Hülle aus z.B. einem Styrol-Copolymeren. Diese Pfropfcopolymerisate haben eine ausgezeichnete Witterungsstabilität und weisen im allgemeinen eine gute Transparenz auf; sie besitzen jedoch nur allenfalls befriedigende, nicht aber gute schlagzähmodifizierende Wirkung. Außerdem beobachtet man eine Abhängigkeit der Zähigkeit von der Verarbeitungstemperatur (Spritzgußtemperatur), eine für den Kunststoff-Verarbeiter unerwünschte Eigenschaft.

Es bestand daher die Notwendigkeit, Pfropfcopolymerisate zu erhalten, die neben hervorragender Witterungsstabilität eine sehr hohe Zähigkeit aufweisen, sowie eine Unabhängigkeit der Zähigkeit von der Verarbeitungstemperatur.

Es wurde gefunden, daß schlagzäh modifizierte thermoplastische Polymere mit besonders hoher Kerbschlagzähigkeit, verbunden mit einer Unabhängigkeit der Zähigkeit von der Verarbeitungstemperatur und einer verbesserten Einfärbbarkeit dann erhalten werden, wenn Teilchen mit einem Kern einer vernetzten Hartphase aus vinylaromatischem (Co)polymer, einer ersten Hülle aus einer vernetzten Kautschukphase auf Basis eines Alkylacrylats, einer zweiten Hülle aus einem vinylaromatischen (Co)polymer und einer dritten Hülle einer unvernetzten Hartphase aus einem Copolymerisat aus vinylaromatischen Monomer und einem weiteren copolymerisierbaren Monomeren verwendet werden. Überraschenderweise zeichnen sich die erfindungsgemäßen Formmassen auch durch eine verbesserte Entformbarkeit, verbunden mit verbesserter Bindenahtfestigkeit, aus.

Unmittelbarer Erfindungsgegenstand ist ein Pfropfcopolymerisat A, bestehend aus - in der Reihenfolge A1 bis A4 von innen nach außen und jeweils bezogen auf die Summe aus A1 bis A3 -

A1: 5 bis 85 Gew.-% eines Kerns (Pfropfgrundlage) A1 mit einer Glastemperatur $T_g$ oberhalb von 25 ° C, bestehend aus:

A11: 50 bis 99,9 Gew.-% mindestens eines vinylaromatischen Monomeren,

A12: 0,1 bis 10 Gew.-% mindestens eines polyfunktionellen, vernetzend wirkenden Monomeren und/oder ein pfropfaktiv wirkendes Monomer mit zwei oder mehr funktionellen Gruppen unterschiedlicher Reaktivität, wobei vernetzende und pfropfaktive Wirkung auf ein einziges Monomer zutreffen können,

A13: bis 49,9 Gew.-% eines oder mehrerer copolymerisierbarer Monomerer;

A2: 5 bis 85 Gew.-% einer ersten Pfropfhülle A2 aus kautschukelastischem Material mit einer $T_g$ unterhalb von 25 ° C, bestehend aus:

A21: 50 bis 99,9 Gew.-% mindestens eines Alkylacrylates mit 1 bis 18 C-Atomen im Alkylrest,

A22: 0,1 bis 10 Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität, wobei vernetzende und pfropfaktive Wirkung auf ein einziges Monomer zutreffen können,

A23: 0 bis 49,9 Gew.-% eines oder mehrerer copolymerisierbarer ungesättigter Monomerer;

A3: 5 bis 85 Gew.-% einer zweiten Pfropfhülle A3 aus vinylaromatischen Monomer(en) mit einer $T_g$ oberhalb von 25 ° C, bestehend aus:

A31: 50 bis 100 Gew.-% mindestens eines vinylaromatischen Monomeren,

A32: 0 bis 10 Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität,

A33: 0 bis 50 Gew.-% eines oder mehrerer copolymerisierbarer Monomerer;

A4: 5 bis 85 Gew.-% einer dritten Pfropfhülle A4 aus einem Copolymeren aus

A41: 1 bis 99 Gew.-% eines oder mehrerer vinylaromatischer Monomerer,

A42: 1 bis 99 Gew.-% eines oder mehrerer copolymerisierbarer Monomerer

und seine Verwendung zur Schlagzähmodifizierung von harten, thermoplastischen Polymeren.

Pfropfcopolymerisat A

Pfropfgrundlage A1

Die teilchenförmigen Pfropfcopolymerisate A mit Kern/Schale-Aufbau werden in an sich bekannter Weise aus einer Pfropfgrundlage A1, sowie aus darauf nacheinander aufgepfropften Hüllen A2, A3 und A4 hergestellt. Die Pfropfgrundlage wird am besten in wäßriger Emulsion bei 20 bis 100 ° C, bevorzugt zwischen 40 und 80 ° C hergestellt. Hierbei werden vinylaromatische(s) Monomere(s) A11, sowie vernetzend wirkende, polyfunktionelle Monomere und/oder pfropfaktive Monomere, gegebenenfalls zusammen mit weiteren ethylenisch ungesättigten copolymerisierbaren Monomeren polymerisiert. Vernetzende und pfropfaktive Eigenschaften können auf ein einziges Monomer zutreffen.

Beispiele für vinylaromatische Monomere sind Styrol, alpha-Methylstyrol und kernalkylierte Styrole wie p-Methylstyrol und tert.-Butylstyrol. Besonders bevorzugt werden Styrol, alpha-Methylstyrol und p-Methylstyrol allein oder in Mischung eingesetzt. Beispiele für weitere copolymerisierbare ethylenisch ungesättigte Monomere sind Acrylnitril, Acrylsäure, Maleinsäureanhydrid, Acrylamid, N-substituierte Acrylamide, Vinylmethylether allein oder in Mischung.

Zur Erzielung guter mechanischer Eigenschaften hat es sich als notwendig erwiesen, daß das als Pfropfgrundlage verwendete Polymerisat sowohl vernetzt ist, als auch pfropfaktive Stellen für die anschließende Pfropfung vorhanden sind. Hierzu wird die Polymerisation in Gegenwart von 0,1 bis 10 Gew.-%, vorzugsweise von 1 bis 4 Gew.-%, bezogen auf das Gesamtgewicht der bei der Herstellung der Pfropfgrundlage verwendeten Monomeren A12 durchgeführt. Insbesondere wirken die verwendeten Vernetzer gleichzeitig als pfropfaktive Monomere, alternativ können pfropfaktive Monomere in Mengen von 0,1 bis 10 Gew.-% zusätzlich zu den vernetzend und ggf. pfropfaktiv wirkenden Monomeren hinzugegeben werden. Als Vernetzer wirken u.a. Divinylbenzol, Diallylmaleat, Diallylfumarat, Diallylphthalat, Triallylcyanurat oder Triallylisocyanurat. Als pfropfaktive Monomere wirken ungesättigte Monomere, die Epoxy-, Hydroxy-, Carboxyl-, Amino- oder Säureanhydridgruppe tragen, z.B. Hydroxyalkyl(meth)acrylate. Als besonders günstiger Vernetzer und pfropfaktives Monomer hat sich Dicyclopentadienylacrylat, der Acrylsäureester des Tricyclodecenylalkohols erwiesen (vgl. DE-A-12 60 135).

Die Glasübergangstemperatur der Pfropfgrundlage A1 liegt oberhalb von 25 ° C (Die Glasübergangstemperatur wird z.B. mit Hilfe der DSC ermittelt; K.H. Illers; Makromol. Chem. 127, (1969)).

Es können die üblichen Emulgatoren wie Alkalisalze von Alkyl- oder Alkylarylsulfonsäuren, Alkylsulfate, Fettalkoholsulfonate, Salze höherer Fettsäuren mit 10 bis 30 C-Atomen oder Harzseifen verwendet werden. Vorzugsweise werden Natriumsalze von Alkylsulfonaten oder von Fettsäuren mit 10 bis 18 C-Atomen verwendet. Bevorzugt werden Emulgatoren in Mengen von 0,5 bis 5 Gew.-%, bezogen auf das Gesamtgewicht der für die Herstellung der Pfropfgrundlage A1 verwendeten Monomeren eingesetzt. Als Polymerisationsinitiatoren dienen insbesondere die gebräuchlichen Persulfate, es sind jedoch auch Redoxsysteme geeignet. Die Menge an Initiatoren (z.B. 0,1 bis 1 Gew.-%) richtet sich in bekannter Weise nach dem gewünschten Molekulargewicht.

Als Polymerisationshilfsstoffe können die üblichen Puffersubstanzen wie Natriumhydrogencarbonat, Natriumpyrophosphat (mit denen pH-Werte zwischen 6 und 9 eingestellt werden können), sowie Molekulargewichtsregler, wie z.B. Mercaptane, Terpinole oder dimeres alpha-Methylstyrol, verwendet werden.

Die genauen Polymerisationsbedingungen, insbesondere Art, Dosierung und Menge des Emulgators werden innerhalb der oben angegebenen Bereiche im einzelnen so bestimmt, daß der erhaltene Latex des vernetzten Polymeren eine Teilchengröße ($d_{50}$-Wert) im Bereich von etwa 30 bis 1000 nm, bevorzugt im Bereich von 50 bis 800 nm besitzt.

Prinzipiell ist es auch möglich, die Pfropfgrundlage nach einem anderen Verfahren als dem der Emulsionspolymerisation herzustellen, z.B. durch Masse- oder Lösungspolymerisation, und die erhaltenen Polymerisate nachträglich zu emulgieren. Die Verfahren hierfür sind bekannt.

Pfropfhülle A2:

Zur Pfropfung der ersten Hülle A2 auf den Kern (die Pfropfgrundlage) A1 wird in Gegenwart der Pfropfgrundlage A1 mindestens ein Alkylacrylat A21 mit 1 bis 18 C-Atomen im Alkylrest (ggf. mit weiteren copolymerisierbaren Monomeren A23) in Gegenwart von vernetzend wirkenden und pfropfaktiven Monomeren A22 polymerisiert.

Als Monomere A21 kommen Kautschukelastomere bildende Acrylsäurealkylester mit bis zu 18 C-Atomen, insbesondere solche mit 2 bis 8 C-Atomen im Alkylrest allein oder in Mischung in Frage. Insbesondere sind Acrylsäure-n-butylester und Acrylsäureethylhexylester geeignet.

Das unter A1 für die vernetzenden und pfropfaktiven Monomeren A12 Gesagte als auch das für die weiteren copolymerisierbaren Monomeren A13 Gesagte gilt auch für die entsprechenden Komponenten A22 und A23.

Es ist vorteilhaft, die Pfropfcopolymerisation auf das als Pfropfgrundlage dienende Polymerisat A1 wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung von A1 verwendeten Emulgatoren bzw. Initiatoren nicht identisch sein. Emulgator, Initiator und Polymerisationshilfsstoffe können jeweils allein oder in Mischung zur Emulsion der Pfropfgrundlage A1 vorgelegt werden. Sie können aber auch allein oder in Mischung zusammen mit den für die erste Hülle A2 verwendeten Monomer(en) zugegeben werden. Es kann zum Beispiel der Initiator und als Polymerisationshilfsmittel eine Puffersubstanz zur Emulsion der Pfropfgrundlage vorgelegt werden, und anschließend die Monomere für die Hülle gemeinsam mit dem Emulgator zugetropft werden. Es kann jede mögliche Kombination von Vorlage und Zulauf einerseits und Initiator, Emulgator und Polymerisationshilfsmittelandererseits in Frage kommen. Geeignete Verfahren sind bekannt, z.B. aus "Houben-Weyl, Polymere I, S. 219 ff. Im übrigen gilt für die Wahl von Emulgator, Initiator und Polymerisationshilfsstoffen das bei der Herstellung der Pfropfgrundlage Gesagte.

Pfropfhülle A3:

Als vinylaromatische Monomere, als polyfunktionelle vernetzend wirkende Monomere, als pfropfaktive Monomere und als weitere ethylenisch ungesättigte copolymerisierbare Monomere werden die für die Pfropfgrundlage A1 beschriebenen Verbindungen verwendet.

Es ist vorteilhaft, die Pfropfcopolymerisation auf das als Pfropfgrundlage dienende Polymerisat A1 + A2 wiederum in wäßriger Emulsion durchzuführen. Sie kann im gleichen System wie die Polymerisation der Pfropfgrundlage A1 + A2 vorgenommen werden, wobei weiterer Emulgator und Initiator zugegeben werden kann. Diese müssen mit den zur Herstellung von A1 und/oder A2 verwendeten Emulgatoren bzw. Initiatoren nicht identisch sein. Im übrigen gilt für die Wahl und Kombination von Emulgator, Initiator und Polymerisationshilfsstoffen das bei der Herstellung der Pfropfgrundlage und der ersten Hülle Gesagte.

Pfropfhülle A4:

Als vinylaromatische Monomere und als weitere ethylenisch ungesättigte copolymerisierbare Monomere finden die vorstehend beschriebenen Verbindungen Verwendung.

Zweckmäßig wird die Pfropfcopolymerisation der dritten Hülle wiederum in wäßriger Emulsion durchgeführt. Sie kann im gleichen System wie die Polymerisation der Pfropfgrundlage vorgenommen werden, wobei weiterer Emulgator und Initiator zugegeben werden kann. Diese müssen mit den vorher verwendeten Emulgatoren bzw. Initiatoren nicht identisch sein. Im übrigen gilt für die Wahl und Kombination von Emulgator, Initiator und Polymerisationshilfsstoffen das bei der Herstellung der Pfropfgrundlage und ersten Hülle Gesagte.

Copolymerisat B

Bevorzugte Copolymerisate B sind solche aus wenigstens einem Monomeren aus der Reihe Styrol, α-Methylstyrol, kernsubstituiertem Styrol, wie p-Methylstyrol, Methylmethacrylat mit wenigstens einem Monomeren aus der Reihe Acrylnitril, Methacrylnitril, Maleinsäureanhydrid.

Copolymerisate B entstehen häufig bei der Pfropfpolymerisation zur Herstellung der Komponente A als Nebenprodukte, besonders dann, wenn große Mengen Monomere auf kleine Mengen Kautschuk gepfropft werden.

Die Copolymerisate B sind harzartig, thermoplastisch und kautschukfrei. Besonders bevorzugte Copolymerisate B sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat und aus Styrol und Maleinsäureanhydrid.

Besonders bevorzugte Gewichtsverhältnisse im thermoplastischen Copolymerisat B sind 60 bis 80 Gew.-% des vinylaromatischen und 40 bis 20 Gew.-% des ethylenisch ungesättigten Monomeren. Es können auch mehrere der beschriebenen Copolymeren gleichzeitig eingesetzt werden.

Die Copolymerisate B sind bekannt und lassen sich durch radikalische Polymerisation, insbesondere durch Emulsions-, Suspensions-, Lösungs- oder Massepolymerisation herstellen. Sie weisen Viskositätszahlen im Bereich von 40 bis 160, vorzugsweise von 60 bis 100 (ml/g) auf, dies entspricht Molekulargewichten $\overline{M}_w$ zwischen 15 000 und 200 000.

Polycarbonat C

Erfindungsgemäß geeignete, thermoplastische, aromatische Polycarbonate C sind solche auf Basis der Diphenole der Formel (I)

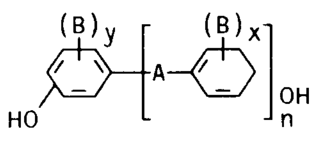

(I),

worin A: eine Einfachbindung, ein $C_1$-$C_5$-Alkylen, ein $C_2$-$C_5$-Alkyliden, ein $C_2$-$C_6$-Cycloalkyliden, -S- oder -$SO_2$-, B: Chlor, Brom oder $C_1$-$C_8$-Alkyl, x und y unabhängig voneinander: 0, 1 oder 2 und n: 1 oder 0 sind.

Erfindungsgemäß geeignete Polycarbonate C sind sowohl Homopolycarbonate als auch Copolycarbonate.

Die Diphenole der Formel (I) sind entweder literaturbekannt oder nach literaturbekannten Verfahren herstellbar.

Die Herstellung der erfindungsgemäß geeigneten Polycarbonate gemäß C ist bekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-Chlorphenol, p-tert.-Butylphenol oder 2,4,6-Tribromphenol, aber auch langkettige Alkylphenole wie 4-(1,1,3,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß deutscher Patentanmeldung P 35 06 472.2 (Le A 23 654), wie beispielsweise p-Nonylphenol, 3,5-di-tert.-Butylphenol, p-tert.-Octylphenol, p-Dodecylphenol, 2-(3,5-Dimethyl-heptyl)-phenol und 4-(3,5-Dimethylheptyl)-phenol.

Die erfindungsgemäß geeigneten Polycarbonate C haben ein gewichtsgemitteltes Molekulargewicht ($\overline{M}_w$, gemessen beispielsweise mittels Ultrazentrifuge oder Streulicht) von 10 000 bis 200 000, vorzugsweise von 20 000 bis 80 000.

Geeignete Diphenole der Formel (I) sind beispielsweise Hydrochinon, Resorcin, 4,4'-Dihydroxybiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan, 2,2-Bis-(3,5-dimethyl-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan und 1,1-Bis-(4-hydroxyphenyl)-cyclohexan.

Die erfindungsgemäß geeigneten Polycarbonate C können in bekannter Weise verzweigt sein, und zwar durch den Einbau von geringen Mengen, z.B. 0,05 bis 2,0 Mol.-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol A-Homopolycarbonat die Copolycarbonate von Bisphenol A mit bis zu 15 Mol.-%, bezogen auf die Molsumme an Diphenolen, an 2,2-Bis-(3,5-dibrom-4-hydroxyphenyl)-propan.

Die erfindungsgemäßen teilchenförmigen Pfropfpolymerisate können für sich allein als Formmassen verwendet werden. Hierzu können sie z.B. durch Sprühtrocknung aufgearbeitet werden. Bevorzugt werden die teilchenförmigen Pfropfpolymerisate jedoch zur Abmischung mit einem Thermoplasten verwendet, um dessen Schlagzähigkeit zu erhöhen. Zur Modifizierung geeignete Thermoplaste haben eine Glasübergangstemperatur über 25 °C, bevorzugt über 60 °C, besonders bevorzugt über 80 °C. Sie werden im folgenden auch als Hartkomponente (Matrix) bezeichnet. Beispiele für geeignete Hartkomponenten sind Polyvinylchlorid, Polymethylmethacrylat sowie insbesondere Copolymere aus vinylaromatischen Monomeren und polaren, copolymerisierbaren, ethylenisch ungesättigten Monomeren. Geeignete vinylaromatische sowie polare, copolymerisierbare, ethylenisch ungesättigte Monomere sind auch hier die bei der Herstellung der Pfropfhülle als B1 und B2 genannten. Besonders bevorzugte Hartkomponenten sind Styrol-Acrylnitril- und $\alpha$-Methylstyrol-Acrylnitril-Copolymere. Die Einarbeitung der erfindungsgemäßen teilchenförmigen Pfropfpolymerisate kann z.B. dadurch erfolgen, daß das teilchenförmige Pfropfpolymerisat durch Zugabe eines Elektrolyten aus der Emulsion isoliert wird und anschließend, gegebenenfalls nach Trocknung, durch gemeinsames Extrudieren, Kneten oder Walzen mit der Hartkomponente vermischt wird.

Die erfindungsgemäßen thermoplastischen Formmassen können als weitere Bestandteile Zusatzstoffe erhalten, wie sie für thermoplastische Formmassen üblich sind. Als solche seien beispielsweise genannt: Füllstoffe, weitere, verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von 0,1 bis 30 Gew.-%, bezogen auf das Gesamtgewicht der thermoplastischen Formmasse eingesetzt. Verträgliche Kunststoffe können auch einen höheren Anteil ausmachen.

Die erfindungsgemäßen Massen lassen sich nach den für die Thermoplastverarbeitung üblichen Verfahren, wie z.B. Extrusion und Spritzgießen, zu Formkörpern, wie z.B. Fensterprofilen, Gartenmöbeln, Booten, Schildern, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit bei hoher Witterungs- und Alterungsbeständigkeit gefordert ist.

Die nachstehend zur Kennzeichnung verwendeten Größen wurden wie folgt bestimmt:

- Bei der Angabe der mittleren Teilchengröße handelt es sich in allen Fällen um das Gewichtsmittel der Teilchengröße, wie sie mittels einer analytischen Ultrazentrifuge entsprechend der Methode von W.

Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Masseverteilung bezeichnet wird, ist dabei als der Wert definiert, bei dem 50 Gew.-% der Teilchen einen kleineren und 50 Gew.-% der Teilchen einen größeren Durchmesser als der $d_{50}$-Wert aufweisen.

- Die Kerbschlagzähigkeit in [kJ/m$^2$] wurde nach DIN 53 453 an gespritzten Normkleinstäben bei 23 °C gemessen. Untersucht wurden jeweils drei Probenserien bei unterschiedlichen Verarbeitungstemperaturen. Die gefundenen Ergebnisse sind in der Tabelle zusammengefaßt.
- Die Viskositätszahl in [cm$^3$/g] wird an einer 0,5 %igen Lösung bei 23 °C in Dimethylformamid bestimmt. Unlösliche Gelanteile wurden vor der Messung durch Zentrifugieren entfernt und die Einwaage entsprechend korrigiert.

Beispiele

Zur Herstellung der Abmischungen wurde als Hartkomponente B ein Styrol/-Acrylnitril-Copolymerisat mit einem Acrylnitril-Gehalt von 35 % und einer Viskositätszahl von 80 ml/g verwendet. Das gefällte und getrocknete Pfropfmischpolymerisat wurde auf einem Extruder bei 260 °C so mit der Hartkomponente abgemischt, daß das resultierende Gemisch einen Pfropfpolymerisatanteil von 50 % aufwies. Aus diesem Gemisch wurden durch Spritzguß Formteile hergestellt.

Beispiel 1
Herstellung eines 4-stufigen Pfropfcopolymerisats mit Butandioldiacrylat und Dicyclopentadienylacrylat als Vernetzer

Herstellung der Pfropfgrundlage A1

4200 g Wasser, 6 g des Na-Salzes einer C12- bis C18-Paraffinsulfonsäure, 2 g Kaliumperoxodisulfat, 3 g Natriumhydrogencarbonat und 1,5 g Natriumpyrophosphat wurden unter Rühren auf 60 °C erwärmt. Ein Gemisch aus 570 g Styrol, 18 g Butandioldiacrylat und 12 g Dicyclopentadienylacrylat wurde innerhalb von 3 Stunden zugegeben. Feststoffgehalt: 12,7 %; pH: 8,1; Teilchendurchmesser $d_{(50)}$: 81 nm.

Herstellung der ersten Hülle A2

Zur Emulsion wurden 24 g des Na-Salzes einer C12- bis C18-Paraffinsulfonsäure, 7,2 g Kaliumperoxodisulfat, 6 g Natriumhydrogencarbonat und 3 g Natriumpyrophosphat bei 60 °C innerhalb von 2,5 Stunden zugetropft. Gleichzeitig wurden 2400 g eines Gemisches aus 98 Teilen n-Butylacrylat und 2 Teilen Dicyclopentadienylacrylat innerhalb von 2,5 Stunden zugetropft. Es wurde 2 Stunden bei 60 °C nachgerührt. Feststoffgehalt: 42,1 %; pH: 8,4; Teilchendurchmesser $d_{(50)}$: 150 nm.

Herstellung der zweiten Hülle A3

4800 g der erhaltenen Emulsion, 1900 g Wasser, 6 g des Na-Salzes einer C12- bis C18-Paraffinsulfonsäure und 5 g Kaliumperoxodisulfat werden unter Rühren auf 60 °C erwärmt. 420 g Styrol werden innerhalb von 1 Stunde zudosiert und noch 30 min. nachgerührt. Feststoffgehalt: 34,3 %; pH: 8,0; Teilchendurchmesser $d_{(50)}$: 159 nm.

Herstellung der dritten Hülle A4

Zu der erhaltenen Emulsion wird bei 60 °C ein Gemisch aus 650 g Styrol und 220 g Acrylnitril innerhalb von 2 Stunden unter Rühren zugetropft und noch 2 Stunden gerührt. Feststoffgehalt: 41,4 %; pH: 8,6; Teilchendurchmesser $d_{(50)}$: 180 nm.

Beispiel 2
Herstellung eines 4-stufigen Pfropfcopolymerisats mit Dicyclopentadienylacrylat als Vernetzer

Herstellung der Pfropfgrundlage A1

4200 g Wasser, 6 g des Na-Salzes einer C12- bis C18-Paraffinsulfonsäure, 2 g Kaliumperoxodisulfat, 3 g Natriumhydrogencarbonat und 1,5 g Natriumpyrophosphat wurden unter Rühren auf 60 ° C erwärmt. Ein Gemisch aus 588 g Styrol und 12 g Dicyclopentadienylacrylat wurde innerhalb von 3 Stunden zugegeben. Feststoffgehalt: 12,7 %; pH: 8,0; Teilchendurchmesser $d_{(50)}$: 81 nm.

Herstellung der ersten Hülle A2

Zur beschriebenen Emulsion von A1 wurden 24 g des Na-Salzes einer C12- bis C18-Paraffinsulfonsäure, 7,2 g Kaliumperoxodisulfat, 6 g Natriumhydrogencarbonat und 3 g Natriumpyrophosphat bei 60 ° C innerhalb von 2,5 Stunden zugetropft. Gleichzeitig wurden 2400 g eines Gemisches aus 98 Teilen n-Butylacrylat und 2 Teilen Dicyclopentadienylacrylat innerhalb von 2,5 Stunden zugetropft. Es wurde 2 Stunden bei 60 ° C nachgerührt. Feststoffgehalt: 42,1 %; pH: 8,3; Teilchendurchmesser $d_{(50)}$ : 148 nm.

Herstellung der zweiten Hülle A3

4800 g der erhaltenen Emulsion von A2, 1900 g Wasser, 6 g des Na-Salzes einer C12- bis C18-Paraffinsulfonsäure und 5 g Kaliumperoxodisulfat werden unter Rühren auf 60 ° C erwärmt. 420 g Styrol werden innerhalb von 1 Stunde zudosiert, bei 30 min. Nachrührzeit. Feststoffgehalt: 34,3 %; pH: 8,0; Teilchendurchmesser $d_{(50)}$: 160 nm.

Herstellung der dritten Hülle A4

Zu der erhaltenen Emulsion von A3 wird bei 65 ° C ein Gemisch aus 650 g Styrol und 220 g Acrylnitril innerhalb von 2 Stunden unter Rühren zugetropft. Nach 2 Stunden Nachrührzeit ist die Reaktion beendet. Feststoffgehalt: 41,4 %; pH: 8,4; Teilchendurchmesser $d_{(50)}$: 180 nm.

Vergleichsversuch 1
Herstellung eines 3-stufigen Pfropfcopolymerisats mit Butandioldiacrylat und Dicyclopentadienylacrylat als Vernetzer

Herstellung einer Pfropfgrundlage

4200 g Wasser, 6 g des Na-Salzes einer C12- bis C18-Paraffinsulfonsäure, 2 g Kaliumperoxodisulfat, 3 g Natriumhydrogencarbonat und 1,5 g Natriumpyrophosphat wurden unter Rühren auf 60 ° C erwärmt. Ein Gemisch aus 570 g Styrol, 18 g Butandioldiacrylat und 12 g Dicyclopentadienylacrylat wurde innerhalb von 3 Stunden zugegeben. Feststoffgehalt: 12,7 %; pH: 8,1; Teilchendurchmesser $d_{(50)}$: 82 nm.

Herstellung einer ersten Hülle

Zur vorstehend beschriebenen Emulsion wurden 24 g des Na-Salzes einer C12-bis C18-Paraffinsulfonsäure, 7,2 g Kaliumperoxodisulfat, 6 g Natriumhydrogencarbonat und 3 g Natriumpyrophosphat bei 60 ° C innerhalb von 2,5 Stunden zugetropft. Gleichzeitig wurden 2400 g eines Gemisches aus 98 Teilen n-Butylacrylat und 2 Teilen Tricyclodecenylacrylat innerhalb von 2,5 Stunden zugetropft. Es wurde 2 Stunden bei 60 ° C nachgerührt. Feststoffgehalt: 42,1 %; pH: 8,3; Teilchendurchmesser $d_{(50)}$: 149 nm.

Herstellung einer zweiten Hülle

4800 g wie vorstehend erhaltene Emulsion, 1900 g Wasser und 5 g Kaliumperoxodisulfat werden unter Rühren auf 60 ° C erwärmt. 960 g Styrol und 320 g Acrylnitril werden innerhalb von 1 Stunde zudosiert, bei 30 min. Nachrührzeit. Feststoffgehalt: 41,4 %; pH: 8,4; Teilchendurchmesser $d_{(50)}$: 179 nm.

Vergleichsversuch 2

Herstellung eines 3-stufigen Pfropfcopolymerisats mit Dicyclopentadienylacrylat als Vernetzer

Herstellung einer Pfropfgrundlage

4200 g Wasser, 6 g des Na-Salzes einer C12- bis C18-Paraffinsulfonsäure, 2 g Kaliumperoxodisulfat, 3 g Natriumhydrogencarbonat und 1,5 g Natriumpyrophosphat wurden unter Rühren auf 60 °C erwärmt. Ein Gemisch aus 588 g Styrol und 12 g Dicyclopentadienylacrylat wurde innerhalb von 3 Stunden zugegeben. Feststoffgehalt: 12,7 %; pH: 8,1; Teilchendurchmesser $d_{(50)}$: 82 nm.

Herstellung einer ersten Hülle

Zur vorstehend beschriebenen Emulsion wurden 24 g des Na-Salzes einer C12-bis C18-Paraffinsulfonsäure, 7,2 g Kaliumperoxodisulfat, 6 g Natriumhydrogencarbonat und 3 g Natriumpyrophosphat bei 60 °C innerhalb von 2,5 Stunden zugetropft. Gleichzeitig wurden 2400 g eines Gemisches aus 98 Teilen n-Butylacrylat und 2 Teilen Tricyclodecenylacrylat innerhalb von 2,5 Stunden zugetropft. Es wurde 2 Stunden bei 60 °C nachgerührt. Feststoffgehalt: 42,1 %; pH: 8,3; Teilchendurchmesser $d_{(50)}$: 151 nm.

Herstellung einer zweiten Hülle

4800 g der wie vorstehend erhaltenen Emulsion, 1900 g Wasser und 5 g Kaliumperoxodisulfat werden unter Rühren auf 60 °C erwärmt. 960 g Styrol und 320 g Acrylnitril werden innerhalb von 1 Stunde zudosiert, bei 30 min. Nachrührzeit. Feststoffgehalt: 41,4 %; pH: 8,4; Teilchendurchmesser $d_{(50)}$: 180 nm.

Vergleichsversuch 3
Herstellung eines 2-stufigen Pfropfcopolymerisats mit Dicyclopentadienylacrylat als Vernetzer

Herstellung der Pfropfgrundlage

4200 g Wasser, 30 g des Na-Salzes einer C12- bis C18-Paraffinsulfonsäure, 9,2 g Kaliumperoxodisulfat, 9 g Natriumhydrogencarbonat und 4,5 g Natriumpyrophosphat wurden unter Rühren auf 60 °C erwärmt. Ein Gemisch aus 2940 g n-Butylacrylat und 60 g Dicyclopentadienylacrylat wurde innerhalb von 3 Stunden zugegeben. Feststoffgehalt: 42,1 %; pH: 8,1; Teilchendurchmesser $d_{(50)}$: 148 nm.

Herstellung einer Hülle

4800 g der wie vorstehend erhaltenen Emulsion, 1900 g Wasser und 5 g Kaliumperoxodisulfat werden unter Rühren auf 65 °C erwärmt. 960 g Styrol und 320 g Acrylnitril werden innerhalb von 1 Stunde zudosiert, bei 30 min. Nachrührzeit. Feststoffgehalt: 41,4 %; pH: 8,2; Teilchendurchmesser $d_{(50)}$: 180 nm.

Tabelle - Abmischungen der Pfropfkautschuke (Komponente A) mit Styrol/Acrylnitril-Copolymerisaten (Komponente B)

Jeweils 50 Teile Komponente A werden mit 50 Teilen Komponente B im Extruder gemischt.

| Komponente A | Vicat-Erweichungs-temperatur [°C] | Meltindex MFI (220/10) in [g/10min] | Kerbschlagzähigkeit $a_K$ bei T 220 | 250 | 280°C 1) |
|---|---|---|---|---|---|
| Beispiel 1 | 95 | 3 | 29,3 | 28,4 | 27,9 |
| Beispiel 2 | 95 | 3 | 30,4 | 31,5 | 31,5 |
| Vergleichsversuch 1 | 95 | 2 | 4,3 | 4,6 | 4,8 |
| Vergleichsversuch 2 | 95 | 2 | 19,7 | 28,3 | 30,9 |
| Vergleichsversuch 3 | 94 | < 2 | 7,9 | 19,6 | 23,1 |

1) 3 verschiedene Verarbeitungstemperaturen im Spritzguß

## Patentansprüche

1. Pfropfcopolymerisat A, bestehend aus - in der Reihenfolge A1 bis A4 von innen nach außen und jeweils bezogen auf die Summe aus A1 bis A3 -

A1: 5 bis 85 Gew.-% eines Kerns (Pfropfgrundlage) A1 mit einer Glastemperatur $T_g$ oberhalb von 25 ° C, bestehend aus:

A11: 50 bis 99,9 Gew.-% mindestens eines vinylaromatischen Monomeren,

A12: 0,1 bis 10 Gew.-% mindestens eines polyfunktionellen, vernetzend wirkenden Monomeren und/oder ein pfropfaktiv wirkendes Monomer mit zwei oder mehr funktionellen Gruppen unterschiedlicher Reaktivität, wobei vernetzende und pfropfaktive Wirkung auf ein einziges Monomer zutreffen können,

A13: bis 49,9 Gew.-% eines oder mehrerer copolymerisierbarer Monomerer;

A2: 5 bis 85 Gew.-% einer ersten Pfropfhülle A2 aus kautschukelastischem Material mit einer $T_g$ unterhalb von 25 ° C, bestehend aus:

A21: 50 bis 99,9 Gew.-% mindestens eines Alkylacrylates mit 1 bis 18 C-Atomen im Alkylrest,

A22: 0,1 bis 10 Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität, wobei vernetzende und pfropfaktive Wirkung auf ein einziges Monomer zutreffen können,

A23: 0 bis 49,9 Gew.-% eines oder mehrerer copolymerisierbarer ungesättigter Monomerer;

A3: 5 bis 85 Gew.-% einer zweiten Pfropfhülle A3 aus virtylaromatischen Monomer(en) mit einer $T_g$ oberhalb von 25 ° C, bestehend aus:

A31: 50 bis 100 Gew.-% mindestens eines vinylaromatischen Monomeren,

A32: 0 bis 10 Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität,

A33: 0 bis 50 Gew.-% eines oder mehrerer copolymerisierbarer Monomerer;

A4: 5 bis 85 Gew.-% einer dritten Pfropfhülle A4 aus einem Copolymeren aus

A41: 1 bis 99 Gew.-% eines oder mehrerer vinylaromatischer Monomerer,

A42: 1 bis 99 Gew.-% eines oder mehrerer copolymerisierbarer Monomerer.

**2.** Thermoplastische Formmasse aus, bezogen auf die Summe aus A, B und C

A: 5 bis 95 Gew.-% mindestens eines Pfropfcopolymerisats A nach Anspruch 1;

B: 95 bis 5 Gew.-% mindestens eines Copolymerisats B aus, bezogen auf B, 50 bis 90 Gew.-% Styrol, alpha-Alkylstyrol, kernsubstituiertem Styrol, $C_1$-$C_8$-Alkyl(meth)acrylat, oder deren Mischungen und 10 bis 50 Gew.-% (Meth)acrylnitril, Maleinsäureanhydrid, N-substituiertem Maleinimid, $C_1$-$C_{18}$-Alkyl(meth)acrylat oder deren Mischungen;

C: bis zu 90 Gew.-% mindestens eines Polycarbonats C;

D: bis zu 100 Gew.-%, bezogen auf die Mischung aus A, B und C, üblichen Zusatzstoffen.

Europäisches Patentamt

# EUROPÄISCHER RECHERCHENBERICHT

Nummer der Anmeldung

EP 92 11 5904

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DATABASE WPI<br>Derwent Publications Ltd., London, GB;<br>AN 78-26084A<br>& JP-A-53 018 661 (MITSUBISHI RAYON CO. LTD) 21. Februar 1978<br>* Zusammenfassung *<br>--- | 1-2 | C08F285/00<br>C08L51/00<br>C08L69/00<br>C08L25/08 |
| X | EP-A-0 132 339 (ROHM AND HAAS COMPANY)<br>* Ansprüche *<br>* Seite 17, Zeile 1 - Seite 18, Zeile 33 *<br>* Seite 40, Zeile 1 - Seite 41, Zeile 11 *<br>* Seite 9, Zeile 12 - Zeile 19 *<br>--- | 1-2 | |
| A | EP-A-0 379 086 (BASF AG)<br>* Ansprüche *<br>* Beispiele *<br>----- | 1 | |
| | | | RECHERCHIERTE SACHGEBIETE (Int. Cl.5 ) |
| | | | C08F<br>C08L |

Der vorliegende Recherchenbericht wurde für alle Patentansprüche erstellt

| Recherchenort | Abschlußdatum der Recherche | Prüfer |
|---|---|---|
| DEN HAAG | 20 JANUAR 1993 | PERSSON E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)